# EUROPEAN PATENT APPLICATION

(11) **EP 2 833 017 A1**
(43) Date of publication of application: **04.02.2015**
(21) Application number: 13767693.8
(22) Date of filing: 22.02.2013
(51) Int. Cl.: F16F 9/348

(54) **DAMPING VALVE**

(30) Priority: 28.03.2012 JP 2012073070
(71) Applicant: Kayaba Industry Co., Ltd., Tokyo 105-6111 (JP)
(72) Inventor: IZEKI, Toshimichi, Tokyo 105-6111 (JP); YAMADA, Hideki, Tokyo 105-6111 (JP); MIWA, Masahiro, Tokyo 105-6111 (JP)
(74) Representative: Grünecker, Kinkeldey, Stockmair & Schwanhäusser
(86) International application number: PCT/JP2013/054521
(87) International publication number: WO 2013/145981

(57) **Abstract**

In a damping valve having a partition that separates a first chamber and a second chamber, a valve seat that is formed on an end surface of the partition facing the first chamber or the second chamber; and a leaf valve whose outer-circumferential end portion is separably seated on the valve seat, the leaf valve has a plurality of orifices for allowing working fluid to flow therethrough in the outer-circumferential end portion, and the plurality of orifices are concentrated in an arbitrary region along a circumferential direction in the outer-circumferential end portion of the leaf valve.

## Description

### TECHNICAL FIELD

The present invention relates to a damping valve of a shock absorber that is built into a suspension of a vehicle.

### BACKGROUND ART

From the viewpoint of ride comfort on a vehicle, it is preferred to set a shock absorber, which is built into a suspension of a vehicle, such that a damping force is actively generated when the shock absorber is expanded/contracted slowly with a large amplitude, and a damping force generated is suppressed when the shock absorber is expanded/contracted fast with a small amplitude, for example.

JP2003-042214A discloses a damping valve that includes a piston, a ring-shaped valve seat that is formed on an end surface of the piston, and a ring-shaped leaf valve that is separably seated on the valve seat. The leaf valve has orifices formed by slits that are cut in the radial direction from an outer-circumferential end portion.

In this damping valve, the piston separates a space in a cylinder containing working fluid into a first chamber and a second chamber and has ports that allow communication between the first chamber and the second chamber. The leaf valve mentioned above releasably blocks a downstream end of the ports.

In the damping valve disclosed in JP2003-042214A, when the piston speed in the shock absorber is in a low-speed region, the damping force is generated by allowing the working fluid to flow into the ports from the first chamber and to flow out to the second chamber through the orifices. In addition, when the piston speed in the shock absorber is in a high-speed region, the damping force is prevented from becoming excessive by allowing the working fluid to flow into the ports from the first chamber, deflecting the outer-circumferential end portion of the leaf valve, and allowing the working fluid to flow out to the second chamber through the gap formed between the leaf valve and the valve seat.

### SUMMARY OF INVENTION

There is a possibility that the ride feeling on a vehicle is pointed out to be deteriorated if the shock absorber with the damping valve disclosed in JP2003-042214A is built into a suspension of the vehicle.

The damping characteristic of the damping valve disclosed in JP2003-042214A is abruptly changed from the orifice characteristic with which the working fluid passes through the orifices to the valve characteristic with which the working fluid deflects the outer-circumferential end portion of the leaf valve and passes through the gap formed between the leaf valve and the valve seat.

In other words, although the working fluid only passes through the orifices and movement of the outer-circumferential end portion is suppressed when a flow rate of the working fluid is low, as the flow rate of the working fluid passing through the orifices increases, at the point when the orifices can no longer adapt to the flow rate, the outer-circumferential end portion of the leaf valve is deflected to form a gap between the leaf valve and the valve seat, thereby allowing the working fluid to flow out.

When the outer-circumferential end portion of the leaf valve is deflected to form a gap between the leaf valve and the valve seat, because the entire circumference of the outer-circumferential end portion of the leaf valve separates from the valve seat at once, valve opening movement of the leaf valve becomes abrupt, and there will be a sudden change in the damping characteristic from the orifice characteristic to the valve characteristic.

Therefore, for example, if the damping characteristic is changed from the orifice characteristic to the valve characteristic when a vehicle is rolling at a low speed, there are concerns that a passenger may sense loss of a damping force, the ride comfort on a vehicle may be deteriorated, and a noise may be generated due to a sudden change in the internal pressure.

An object of the present invention is to provide a damping valve that prevents a deterioration of the ride comfort and generation of noise on a vehicle.

According to one aspect of the present invention, a damping valve includes a partition that separates a first chamber and a second chamber, a valve seat that is formed on an end surface of the partition facing the first chamber or the second chamber; and a leaf valve whose outer-circumferential end portion is separably seated on the valve seat, wherein the leaf valve has an orifice-concentrated portion in which a plurality of orifices for allowing working fluid to flow therethrough are formed, in a concentrated manner, in an arbitrary region along circumferential direction in an outer-circumferential end portion of the leaf valve.

Embodiments and advantages of the present invention will be described in detail below with reference to the attached drawings.

### BRIEF DESCRIPTION OF DRAWINGS

[FIG. 1] FIG. 1 is a partial longitudinal sectional view showing a shock absorber according to one embodiment of the present invention.
[FIG. 2] FIG. 2 is a lateral sectional view of a piston shown along X-X line in Fig. 1.
[FIG. 3A] FIG. 3A is a plan view showing a first leaf valve.
[FIG. 3B] FIG. 3B is a plan view showing a second leaf valve.
[FIG. 3C] FIG. 3C is a plan view showing a third leaf valve.
[FIG. 4] FIG. 4 is a plan view showing another embodiment of the first leaf valve.
[FIG. 5] FIG. 5 is a perspective view showing opening movement of the first leaf valve.
[FIG. 6] FIG. 6 is a view showing continuity between orifice characteristic and valve characteristic.

### DESCRIPTION OF EMBODIMENT

A damping valve according to an embodiment of the present invention will be described below with reference to drawing. The damping valve according to the embodiment of the present invention is used, for example, in a damping section in a shock absorber that is built into a suspension of a vehicle.

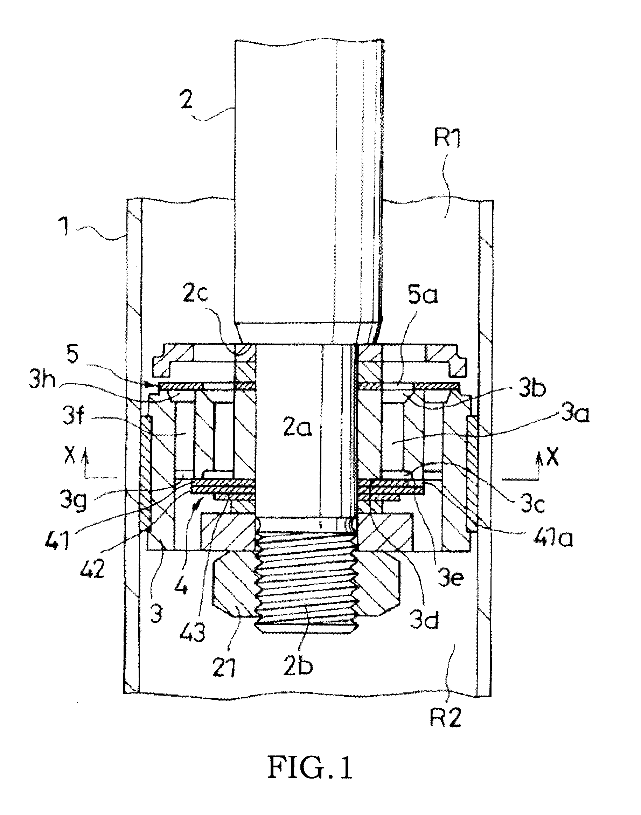

As shown in Fig. 1, the shock absorber has a cylinder 1 that contains, for example, working fluid that is working oil, a piston rod 2 that is inserted into the cylinder 1 so as to be capable of moving in and out, and a piston 3 that is held at a tip end portion 2a located at the lower end part of the piston rod 2 in Fig. 1 and that is slidably inserted into the cylinder 1 so as to be a partition that divides the space inside the cylinder 1 into a first chamber R1 and a second chamber R2. The working fluid may be liquid other than the working oil.

The shock absorber illustrated is of an upright type in which the cylinder 1 is linked with the axle side of a vehicle as a lower-end-side member, and the piston rod 2 is linked with the body side of a vehicle as an upper-end-side member. For the damping valve according to the embodiment of the present invention, although the shock absorber is of an upright type, it may also be of an inverted type. In addition, although the shock absorber in the embodiment of the present invention is of a mono-tube type, it may also be of a multi-tube type instead.

The damping valve according to the embodiment of the present invention is provided on a damping section of the shock absorber, in other words, on an expansion-side valve 4 provided on the one end side of the piston 3 facing the second chamber R2. In Fig. 1, the second chamber R2 is located at the lower end side of the piston 3 that is slidably inserted into the cylinder 1.

In Fig. 1, a compression-side valve 5 is provided on the other end of the piston 3 facing the first chamber R1 at the upper end side of the piston 3. Considering that the damping action is achieved by the compression-side valve 5 by allowing the flow of the working oil therethrough, the damping valve may be provided on the compression-side valve 5.

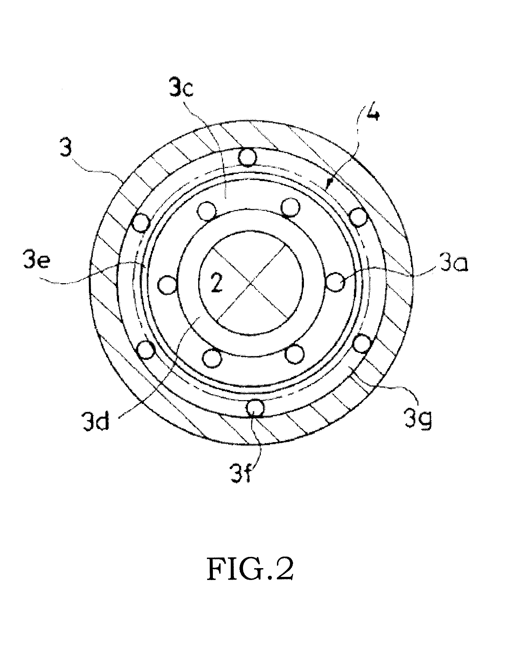

On the premise of the above description, the damping valve according to the embodiment of the present invention will be described below. The piston 3 has expansion-side ports 3a that allow communication between the first chamber R1 and the second chamber R2 that are formed inside the cylinder 1. In Fig. 1, the upstream ends, that are the upper ends, of the expansion-side ports 3a open to a ring-shaped groove 3b that is formed at the upper end of the piston 3 facing the first chamber R1. In Fig. 1, the downstream ends, that are the lower ends, of the expansion-side ports 3a open to a ring-shaped groove 3c that is formed on the lower end side of the piston 3 facing the second chamber R2 (see Fig. 2).

As also shown in Fig. 2, the piston 3 has an inner-circumferential-side securing portion 3d on which an inner-circumferential end portion (not shown with reference sign) of the expansion-side valve 4, which is at the lower end side in Fig. 1, is seated and a ring-shaped valve seat 3e that is formed outside the inner-circumferential-side securing portion 3d such that the ring-shaped groove 3c is formed between the ring-shaped valve seat 3e and the inner-circumferential-side securing portion 3d.

The ring-shaped groove 3b is communicated with the first chamber R1 through holes 5a formed in the compression-side valve 5. A circle indicated by one-dot chain line in Fig. 2 indicates the contour of the expansion-side valve 4 that is seated on the valve seat 3e. Illustration of a piston ring provided on outer circumference of the piston 3 is omitted.

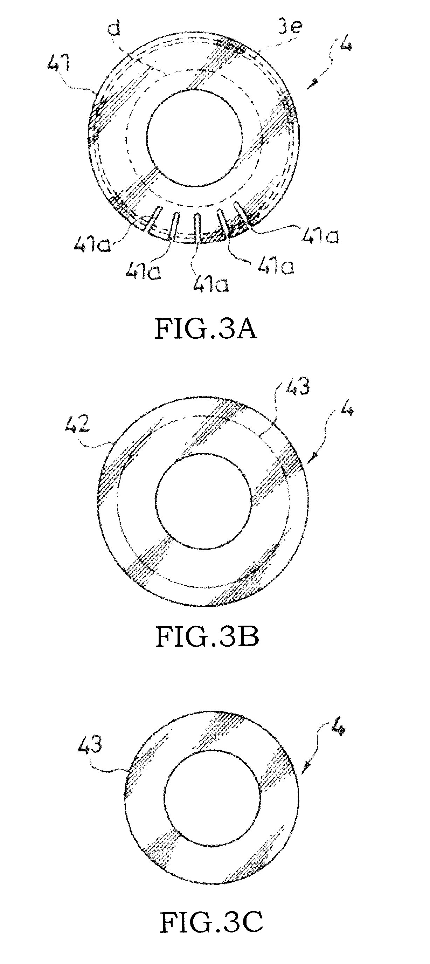

On the other hand, the expansion-side valve 4 consists of a plurality of ring-shaped leaf valves that are stacked on the lower end side of the piston 3. In addition, as shown in Fig. 3, the leaf valves consist of a first leaf valve 41 and a second leaf valve 42 having the same diameter and a third leaf valve 43 having a diameter smaller than that of the first leaf valve 41 and the second leaf valve 42. For the third leaf valve 43, it may be formed to have the same diameter as the second leaf valve 42.

The expansion-side valve 4 releasably blocks the ring-shaped groove 3c of the piston 3 by having an inner-circumferential end portion that is fixed by being seated on the inner-circumferential-side securing portion 3d of the piston 3 and an outer-circumferential end portion (not shown with reference sign) that is separably seated on the valve seat 3e of the piston 3.

In other words, the first leaf valve 41 is stacked on the lower end side of the piston 3 such that whose inner-circumferential end portion (not shown with reference sign) is anchored on the inner-circumferential-side securing portion 3d and whose outer-circumferential end portion (not shown with reference sign) is separably seated on the valve seat 3e, and thereby, releasably blocks the ring-shaped groove 3c.

The first leaf valve 41 has, on the outer-circumferential end portion, a plurality of orifices 41a formed of slits for allowing the flow of the working oil therethrough. The plurality of orifices 41a are formed so as to penetrate the first leaf valve 41 in its thickness direction and to extend towards the center from the outer-circumferential surface. In other words, the plurality of orifices 41a open at the outer-circumferential surface of the first leaf valve 41, communicate the ring-shaped groove 3c located at inside the valve seat 3e and the second chamber R2 located at outside the valve seat 3e, and allow the working oil to pass therethrough when the piston speed is in the low-speed region, thereby generating the damping force based on the orifice characteristic.

In addition, the plurality of orifices 41a of the first leaf valve 41 are formed, in a concentrated manner, in an arbitrary region along the circumferential direction in the outer-circumferential end portion as an orifice-concentrated portion. The orifice-concentrated portion has at least two slits within the 180° range in the circumferential direction of the leaf valve 41. In addition, as shown in Fig. 3, the orifices 41a are formed only in a part of region, i.e. the orifice-concentrated portion, and are not formed in other parts in the circumferential direction.

The second leaf valve 42 is stacked on the back surface of the first leaf valve 41 at the second chamber R2 side so as to cover the orifices 41a. In other words, the working oil passes through the orifices 41a and flows out to the second chamber R2 from openings at the outer-circumferential surface of the first leaf valve 41.

The outer-circumferential end portion of the second leaf valve 42 deflects together with the outer-circumferential end portion of the first leaf valve 41, on which the second leaf valve 42 is stacked, and follows the movement of the first leaf valve 41 when the first leaf valve 41 is deflected and separated from the valve seat 3e.

The third leaf valve 43 is stacked on the back surface of the second leaf valve 42 at the second chamber R2 side and functions so as to suppress the deflection movement of the outer-circumferential end portion of the second leaf valve 42, in other words, the deflection movement of the outer-circumferential end portion of the first leaf valve 41.

In other words, by selecting the size of the diameter of the third leaf valve 43, it is possible to control the amount of deflection of the outer-circumferential end portion of the second leaf valve 42, and in turn, to control the amount of deflection of the outer-circumferential end portion of the first leaf valve 41.

In the damping valve according to the embodiment of the present invention, only the first leaf valve 41 suffices to be provided, and the second leaf valve 42 and the third leaf valve 43 are not necessarily required.

In the shock absorber having the damping valve formed as described above, during an expanding action in which the piston 3 is lifted up within the cylinder 1, the working oil flows out from the high-pressure side first chamber R1 to the low-pressure side second chamber R2 through the expansion-side ports 3a.

In the damping valve according to the embodiment of the present invention, when the piston speed in the cylinder 1 is in the low-speed region, the working oil in the expansion-side ports 3a flows out to the second chamber R2 through the ring-shaped groove 3c and the orifices 41a, and the damping force based on the orifice characteristic is generated by the pressure loss caused by the flow of the working oil through the orifices 41a.

As the piston speed in the cylinder 1 is increased to be in a middle-or high-speed region, the working oil in the ring-shaped groove 3b deflects the outer-circumferential end portions of the first leaf valve 41 and the second leaf valve 42 via the expansion-side ports 3a. Thus, the working oil flows out to the second chamber R2 through a gap formed between the valves and the valve seat 3e, and damping force based on valve characteristic is generated by the pressure loss caused by the flow of the working oil through the gap formed between the first leaf valve 41 and the valve seat 3e.

In the damping valve according to the embodiment of the present invention, the plurality of orifices 41 a formed in the outer-circumferential end portion of the first leaf valve 41 are formed in a concentrated manner in an arbitrary region along the circumferential direction in the outer-circumferential end portion, in other words, in one region, as shown in Fig. 3.

As shown in Fig. 3(A), the first leaf valve 41 has the orifice-concentrated portion that is an arbitrary region along circumferential direction in the outer-circumferential end portion in which the plurality of orifices 41a are formed. Therefore, the orifice-concentrated portion has the deflection stiffness lower than that in the other parts along the circumferential direction in the outer-circumferential end portion of the first leaf valve 41, and tends to be deflected more easily.

Assuming that a pair of slits are provided on the leaf valve 41 as the orifices 41 a, the part between the pair of slits tends has the deflection stiffness lower than that in other parts that are not located between the pair of slits.

If a plurality of slits are further provided in the part between the pair of slits, the deflection stiffness in the part between the pair of slits is lowered even further compared to that in the other parts, causing it to deflect more easily.

As described above, at least two slits need to be provided in the leaf valve 41 as the orifices 41a, and deflection may be caused more easily by providing more slits to the part between the two slits.

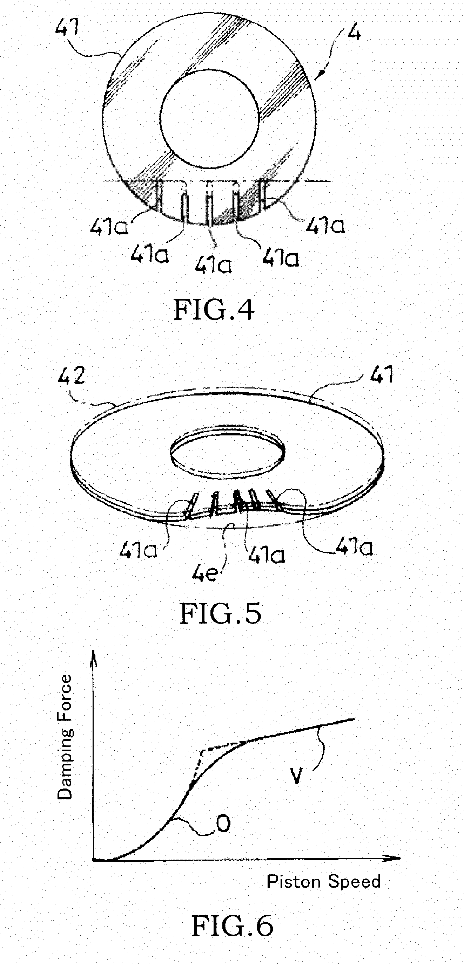

As shown in Fig. 3(A), although the slits consisting the orifices 41a are provided in the radial direction, as shown in Fig. 4, they may be provided in parallel instead.

In the case where the plurality of slits are provided in parallel, the slits may be positioned such that the end portions thereof at the inner circumferential side are aligned at the positions indicated by one-dot chain line in Fig. 4, and also in this case, the deflection stiffness of the orifice-concentrated portion, in which the plurality of slits are concentrated, becomes lower than that in the other parts in the outer-circumferential end portion without the slits, thereby making the deflection to be caused more easily.

The lengths of the slits in the radial direction may be arbitrarily selected as long as the set deflection stiffness can be realized. By setting the lengths of the slits in the radial direction longer, it is possible to effectively lower the deflection stiffness of a part of the outer-circumferential end portion of the first leaf valve 41.

Based on the fact that the orifices 41a can be realized by making the slits to face against the valve seat 3e, the function of the orifices 41a is not affected even if the lengths of the slits are increased, as long as the widths in the radial direction of the valve seat 3e are not increased.

This is because the parts of the slits that overlap with the valve seat 3e function as the orifices as the second leaf valve 42 having the same diameter as the first leaf valve 41 is stacked on the back surface of the first leaf valve 41, and not entire lengths of the slits function as the orifices.

Although the intervals between the respective orifices 41a may be set arbitrarily, based on the fact that the plurality of orifices 41a are formed in a concentrated manner and the arbitrary region in the outer-circumferential end portion of the first leaf valve 41 has a comb-like shape, the part, in which the orifices 41a are concentrated, is formed to have a sufficient strength so as not to undergo plastic deformation or fracture easily even when deflection movements are repeated.

As described above, the lengths of the slits in the radial direction are adjusted such that desired deflection stiffness can be achieved, and the widths of the slits in the circumferential direction are adjusted within a certain range so as to have the strength that is sufficient to prevent plastic deformation or fracture even when deflection movements are repeated. In other words, by adjusting the lengths in the radial direction and the widths in the circumferential direction of the slits such that the orifice-concentrated portion does not undergo plastic deformation or fracture easily, it is possible to adjust the deflection stiffness of the leaf valve 41, and therefore, the damping characteristic of the leaf valve 41.

As described above, in the damping valve according to the embodiment of the present invention, the first leaf valve 41 has the orifice-concentrated portion in which the plurality of orifices 41a are formed, in a manner concentrated in one location, in an arbitrary region along the circumferential direction in the outer-circumferential end portion. Therefore, during the expanding action of the shock absorber in which the piston 3 is lifted within the cylinder 1, the damping valve is operated as in the following.

When the piston speed is in the low-speed region, the working oil flows out to the outside of the valve seat 3e through the orifices 41a without deflecting the outer-circumferential end portion of the leaf valve 41 having the orifices 41 a, and the damping force based on the orifice characteristic is generated by the orifices 41a.

As the piston speed is increased to exceed the low-speed region and shifted to the high-speed region, because the flow rate of the working oil passing through the respective orifices 41a of the leaf valve 41 is increased, the respective orifices 41a become no longer sufficient to allow all working oil to flow out by passing therethrough, and the orifice-concentrated portion of the leaf valve 41 that has been held at the position up to that point is deflected by a fluid force. Then, a gap is partially formed between the leaf valve 41 and the valve seat 3e, and the working oil is allowed to flow out to the outside of the valve seat 3e, generating the damping force based on the valve characteristic.

In the case where the flow rate of the working oil is increased further, the parts of the outer-circumferential end portion of the leaf valve 41 other than the orifice-concentrated portion are also deflected by the fluid force of the working oil to form a gap between the leaf valve 41 and the valve seat 3e. Then, the working oil is allowed to flow out to the outside of the valve seat 3e to generate the damping force based on the valve characteristic.

As described above, in the damping valve according to the embodiment of the present invention, the plurality of orifices 41a are concentrated in a part in the outer-circumferential end portion of the first leaf valve 41, thereby forming the orifice-concentrated portion having lower deflection stiffness than the other parts. Thus, as shown in Fig. 5, this so-called low-stiffness portion is prone to undergo deflection movement compared to the other parts and is separated from the valve seat 3e to undergo valve opening movement before the other parts.

As described above, when the piston speed is in the low-speed region, the working oil flows through the orifices 41a and flows out to the second chamber R2 without deflecting the outer-circumferential end portions of the first leaf valve 41 and the second leaf valve 42, thereby generating the damping force based on the orifice characteristic.

On the other hand, because the higher the piston speed is, the higher the flow rate of the working oil becomes, the orifices 41a become no longer sufficient to allow all working oil to flow out to the second chamber R2 by passing therethrough, and thus, the working oil deflects the outer-circumferential end portion of the first leaf valve 41 and flows out to the second chamber R2. At this time, because the orifice-concentrated portion of the first leaf valve 41 is the low-stiffness portion having the plurality of orifices 41a in a part of the outer-circumferential end portion, the deflection of the first leaf valve 41 starts from this low-stiffness portion.

Therefore, in the first leaf valve 41, as the piston speed exceeds the low-speed region, the orifice-concentrated portion, that is the low-stiffness portion, having the plurality of orifices 41 a in the outer-circumferential end portion is deflected first, and a gap is partially formed between the orifice-concentrated portion and the valve seat 3e. Then, the working oil is allowed to flow out to the second chamber R2 through the gap, and the damping force based on the valve characteristic is generated due to the pressure loss.

As the flow rate of the working oil is further increased by the further increase of the piston speed, for example, the entire circumference of the outer-circumferential end portion, that is the other part, in the first leaf valve 41 is deflected, and a ring-shaped gap is formed between the first leaf valve 41 and the valve seat 3e. The working oil is then fully allowed to flow out to the second chamber R2 through the ring-shaped gap, thereby generating the damping force based on the valve characteristic due to the pressure loss.

As a result, in the course of shifting from the damping action based on the orifice characteristic to the damping action based on the valve characteristic, the first leaf valve 41 is prevented from being opened by sudden deflection of the entire circumference of the outer-circumferential end portion at once, and reaches to a fully opened state by gradual deflection of the outer-circumferential end portion. Therefore, the gradual shift from the orifice characteristic to the valve characteristic is achieved.

Explanation will be given with reference to Fig. 6. Assuming that the first leaf valve 41 does not have the low-stiffness portion, that is the concentrated portion of the orifices 41a, the entire circumference of the outer-circumferential portion in the first leaf valve 41 will open at once. Thus, as shown with broken line in Fig. 6, the damping characteristic is abruptly changed as the orifice characteristic O is shifted to the valve characteristic V.

In contrast, in the damping valve according to the embodiment of the present invention, the first leaf valve 41 has the low-stiffness portion, that is the concentrated portion of the orifices 41a, and a part of the outer-circumferential end portion of the first leaf valve 41 is opened in preference. Thus, in the course of switching from the damping action based on the orifice characteristic to the damping action based on the valve characteristic, the switch to the damping action based on the valve characteristic is not performed fully and suddenly, and the switch to the damping action based on the valve characteristic is gradual. In other words, as shown with solid line in Fig. 6, the damping characteristic is gradually changed as the orifice characteristic O is shifted to the valve characteristic V.

When the outer-circumferential end portion of the above-mentioned first leaf valve 41 undergoes the deflection movement, the outer-circumferential end portion of the second leaf valve 42 also undergoes the deflection movement. In other words, because the second leaf valve 42 is stacked on the back surface of the first leaf valve 41, when the outer-circumferential end portion of the first leaf valve 41 undergoes the deflection movement, the outer-circumferential end portion of the second leaf valve 42 also undergoes the deflection movement. Although respective explanations have been omitted, this omission does not indicate that the second leaf valve 42 does not undergo the deflection movement.

In the shock absorber shown in Fig. 1, the expansion-side valve 4 and the compression-side valve 5 are provided so as to sandwich the piston 3 at the top and lower end sides. Furthermore, the expansion-side valve 4 and the compression-side valve 5 are clamped between a piston nut 21 that is screwed to a tip-end thread portion 2b of the piston rod 2 and a stepped portion 2c formed on the piston rod 2, and provided such that their inner circumferential ends are fixed and the outer-circumferential end portions are free.

Compression-side ports 3f, which penetrate through the piston 3 in parallel with the expansion-side ports 3a, open at the upstream ends thereof to a ring-shaped groove 3g that is formed at the lower end side of the piston 3 and open at the downstream ends thereof to a ring-shaped groove 3h that is formed at the upper end of the piston 3.

During a contracting action of the shock absorber in which the piston 3 is lowered within the cylinder 1, the working oil flows out from the second chamber R2, deflects the outer-circumferential end portion of the compression-side valve 5 through the compression-side ports 3f and the ring-shaped groove 3h, and flows into the first chamber R1.

According to the above-described embodiment, the effects and advantages shown below are afforded.

The leaf valve 41 provided on the damping valve according to the embodiment of the present invention has the orifice-concentrated portion in which the plurality of orifices 41a are formed, in a concentrated manner, in an arbitrary region in the outer-circumferential end portion. Because the orifice-concentrated portion has the deflection stiffness lower than that in the other parts of the outer-circumferential end portion of the leaf valve 41 without the orifices 41a, the orifice-concentrated portion is prone to be deflected compared to the other parts.

When the piston speed is in the low-speed region, the working oil flows out through the plurality of orifices 41a without deflecting the outer-circumferential end portion of the leaf valve 41, and the damping force based on the orifice characteristic is generated.

On the other hand, when the flow rate of the working oil is increased and the plurality of orifices 41a provided on the leaf valve 41 become no longer sufficient to allow all working oil to flow out by passing therethrough, the outer-circumferential end portion having the plurality of orifices 41a is deflected in preference to the other parts by the fluid pressure of the working oil, and a gap is partially formed between the leaf valve 41 and the valve seat 3e. Therefore, the working oil is allowed to flow out through this partial gap, and the damping force based on the valve characteristic is generated by the partially opened leaf valve 41.

As the flow rate of the working oil is further increased, the entire circumference of the outer-circumferential end portion of the leaf valve 41 is deflected, and the ring-shaped gap is formed between the leaf valve 41 and the valve seat 3e. Thus, the working oil is allowed to flow out through the ring-shaped gap, thereby generating the damping force based on the valve characteristic by the fully opened leaf valve 41.

As described above, according to the damping valve according to the embodiment of the present invention, the damping characteristic based on the orifice characteristic that is optimal when the piston speed is in the low-speed region and the damping characteristic based on the valve characteristic that is optimal when the piston speed is in the high-speed region are switched gradually without experiencing any abrupt change, no sudden change in acceleration of the piston is caused, and generation of noise may be suppressed as there is no sudden change in the internal pressure. In other words, according to the damping valve according to the embodiment of the present invention, when the orifice characteristic is switched to the valve characteristic, it is possible to make the change in the damping characteristic gradual, and thus, it is possible to avoid concern of deterioration of ride comfort and generation of noise on a vehicle.

Embodiments of this invention were described above, but the above embodiments are merely examples of applications of this invention, and the technical scope of this invention is not limited to the specific constitutions of the above embodiments.

Modified examples of this embodiment will be described below.

In the above-mentioned embodiment, the valve seat 3e is formed on the piston 3 that is a partition inserted into the cylinder 1. Alternatively, the valve seat 3e may be formed on a valve disc that is a partition in a base valve provided in the lower end portion of the cylinder 1 of a shock absorber set as an upright type.

When the valve disc in the base valve is configured as the partition, the shock absorber is formed as, for example, a multi-tube type shock absorber, a first chamber partitioned by the valve disc becomes a lower side chamber that is partitioned in the cylinder 1 by the piston 3 and a second chamber becomes a reservoir outside the cylinder 1.

In the above-mentioned embodiment, the orifices 41a are slits penetrating the first leaf valve 41 in its thickness direction. Alternatively, the orifices 41a may be formed as grooves that open to the outer-circumferential surface of the leaf valve 41 and that do not penetrate the first leaf valve 41 in its thickness direction. In the case where the orifices 41a are formed as the grooves, because it is necessary to form flow paths for the working oil, the grooves are formed so as to open to the outer-circumferential surface of the leaf valve 41 and such that the working oil flowing in from the first chamber can flow out to the second chamber R2.

In addition, instead of forming the orifices 41a as the slits formed on the outer-circumferential end portion of the first leaf valve 41 and the grooves that do not penetrate the leaf valve 41 in its thickness direction, in consideration of the intention of the present invention, the orifices 41a may be formed as small holes drilled into the first leaf valve 41.

In the above-mentioned embodiment, although the second leaf valve 42 is formed to have the same diameter as the first leaf valve 41, the second leaf valve 42 may be formed to have a different diameter. In other words, as long as the orifices 41a provided on the first leaf valve 41 can be realized as the orifices, the second leaf valve 42 may be formed so as to cover a part of the orifices 41a or so as not to cover the orifices 41a.

In addition, in the case where the orifices 41a are formed as the slits, although the orifices 41a can be realized by stacking the second leaf valve 42 on the first leaf valve 41, as long as the orifices 41 a provided on the first leaf valve 41 can be realized as the orifices, the second leaf valve 42 may not be stacked on the back surface of the first leaf valve 41.

In the above-mentioned embodiment, the case in which the orifices are formed on the first leaf valve 41 has been described as an example. Alternatively, in the case where the orifices consist of engraved portions formed on the valve seat 3e, a plurality of engraved portions may be provided, in a manner concentrated in one location, in the circumferential direction of the valve seat 3e.

This application claims priority based on Japanese Patent Application No.2012-73070 filed with the Japan Patent Office on March 28, 2012, the entire contents of which are incorporated into this specification.

The embodiments of this invention in which an exclusive property or privilege is claimed are defined as follows:

## Claims

1. A damping valve comprising:
a partition that separates a first chamber and a second chamber;
a valve seat that is formed on an end surface of the partition facing the first chamber or the second chamber; and
a leaf valve whose outer-circumferential end portion is separably seated on the valve seat, wherein
the leaf valve has an orifice-concentrated portion in which a plurality of orifices for allowing working fluid to flow therethrough are formed, in a concentrated manner, in an arbitrary region along circumferential direction in an outer-circumferential end portion of the leaf valve.

2. A damping valve according to claim 1, wherein
the plurality of orifices consist of a plurality of slits that are provided so as to have a predetermined interval; therebetween and
a width dimension in a circumferential direction of a part having the plurality of slits is set to be smaller than a width dimension in a circumferential direction of a part without the plurality of slits.

3. A damping valve according to claim 1, wherein
the orifice-concentrated portion consists of at least two slits formed within a 180° range in a circumferential direction of the leaf valve.

4. A damping valve according to claim 1, further comprising
a second leaf valve that is stacked on the leaf valve so as to cover the orifices.

5. A damping valve according to claim 1, wherein
the orifices are formed as slits that open to an outer-circumferential surface of the leaf valve.

6. A damping valve according to claim 2, wherein
a damping force is set based on a linear dimension in a radial direction of the slit and a width dimension in a circumferential direction of the slit.

7. A damping valve according to claim 2, wherein
a length in a radial direction of the slit and a width in a circumferential direction of the slit are set to dimensions such that no plastic deformation is caused by deflection of the leaf valve.
